# EUROPÄISCHE PATENTSCHRIFT

(11) **EP 2 564 005 B1**
(45) Veröffentlichungstag und Bekanntmachung des Hinweises auf die Patenterteilung: **15.10.2014**
(21) Anmeldenummer: 10787305.1
(22) Anmeldetag: 30.11.2010
(51) Int. Cl.: E05F 3/10, E05F 3/22, F16K 31/06

(54) **HYDRAULISCHES MAGNETWEGEVENTIL**
HYDRAULIC SOLENOID DISTRIBUTION VALVE
DISTRIBUTEUR ELECTROMAGNETIQUE HYDRAULIQUE A PLUSIEURS VOIES

(30) Priorität: 01.04.2010 DE 102010013853
(43) Veröffentlichungstag der Anmeldung: 06.03.2013
(73) Patentinhaber: Dorma GmbH & Co. KG, 58256 Ennepetal (DE)
(72) Erfinder: BIENEK, Volker, 44143 Dortmund (DE); WILDFÖRSTER, Thomas, 58332Schwelm (DE)
(86) Internationale Anmeldenummer: PCT/EP2010/007254
(87) Internationale Veröffentlichungsnummer: WO 2011/120546

(56) Entgegenhaltungen:
- DE-B- 1 256 492
- US-A- 4 611 631

## Beschreibung

Die vorliegende Erfindung betrifft ein hydraulisches Magnetwegeventil. Insbesondere wird ein hydraulisches 3/2-Magnetwegeventil in Ausführung als Doppel-Sitzventil in Cartridge-Bauweise vorgestellt.

Der Stand der Technik kennt zum Beispiel 3/2-Wegeventile mit einem magnetischen Aktuator. Diese Art von hydraulischen Ventilen bietet für drei verschiedene Anschlussleitungen zwei verschiedene Schaltstellungen. So wird bei den zwei verschiedenen Schaltstellungen beispielsweise wahlweise eine Druckleitung P mit einer drucklosen Tankleitung T oder aber eine Arbeitsleitung A mit der Tankleitung T verbunden. Ein solches Ventil ist z.B. aus DE-B-1256492 bekannt, welches Ventil die Merkmale des Oberbegriffs des Anspruchs 1 aufweist.

Aufgabe vorliegender Erfindung ist es, ein hydraulisches Magnetwegeventil bereitzustellen, das bei kostengünstiger Herstellung sehr kompakt aufgebaut ist und auch im hohen Druckbereich leckölfrei arbeitet.

Die Aufgabe wird gelöst durch den unabhängigen Anspruch. Die abhängigen Ansprüche haben vorteilhafte Weiterbildungen der Erfindung zum Inhalt.

Somit wird die Aufgabe gelöst durch ein hydraulisches Magnetwegeventil, insbesondere ein hydraulisches 3/2-Magnetwegeventil, umfassend ein Gehäuse, einen Elektromagneten und einen Ventilstößel. In das Gehäuse ist eine Ventilkammer integriert. Diese Ventilkammer umfasst eine erste Ventilsitzbohrung als Verbindung zu einer ersten Leitung, insbesondere Druckleitung, eine zweite Ventilsitzbohrung als Verbindung zu einer zweiten Leitung, insbesondere Arbeitsleitung, und eine freie Öffnung zu einer dritten Leitung, insbesondere Tankleitung. Die Öffnung wird als "frei" bezeichnet, da sie in jeder Schaltstellung des Ventils die Ventilkammer mit der dritten Leitung verbindet. Der Ventilstößel ist zumindest teilweise innerhalb der Ventilkammer angeordnet und wird durch den Elektromagneten linear bewegt. Des Weiteren umfasst der Ventilstößel innerhalb der Ventilkammer eine der ersten Ventilsitzbohrung zugewandte erste Dichtfläche und eine der zweiten Ventilsitzbohrung zugewandte zweite Dichtfläche, sodass wahlweise die erste Ventilsitzbohrung oder die zweite Ventilsitzbohrung verschließbar ist. Des Weiteren erstreckt sich der Ventilstößel aus der Ventilkammer hinaus durch die zweite Ventilsitzbohrung und durch die zweite Leitung hindurch zum Elektromagneten. Dadurch, dass sich der Ventilstößel aus der Ventilkammer hinaus erstreckt, kann der Ventilstößel mit dem Elektromagneten verbunden bzw. teilweise in den Elektromagneten integriert werden. Bei geschlossener zweiter Ventilsitzbohrung wird über ein Differenzflächenverhältnis der Ventilstößel durch den Druck der zweiten Leitung, insbesondere Arbeitsleitung, in die zweite Ventilsitzbohrung gezogen. Diese Anordnung mit Differenzflächenverhältnis begünstigt die leckölfreie Abdichtung der zweiten Ventilsitzbohrung.

Dieses Differenzflächenverhältnis wird insbesondere dadurch erreicht, dass ein Dichtdurchmesser des Ventilstößels außerhalb der Ventilkammer größer ist als ein Durchmesser der zweiten Ventilsitzbohrung. Der Dichtdurchmesser ist dabei an einer Dichtung zwischen Ventilstößel und Elektromagnet definiert.

Bevorzugt wird das Differenzflächenverhältnis erreicht, indem der Durchmesser des Ventilstößels außerhalb der Ventilkammer größer ausgeführt wird als der Bohrungsdurchmesser der zweiten Ventilsitzbohrung. Dadurch kann der Druck der zweiten Leitung vor der Ventilkammer bei einer geschlossenen zweiten Ventilsitzbohrung die Kraft der Druckfeder unterstützen und die zweite Dichtfläche in die zweite Ventilsitzbohrung ziehen.

Bevorzugt umfasst die erste Dichtfläche eine konvexe Oberfläche, insbesondere Kugel. Ferner bevorzugt umfasst die zweite Dichtfläche eine Kegelfläche, insbesondere eine Kegelringfläche. Durch lineares Verschieben bzw. Bewegen des Ventilstößels wird wahlweise die erste Ventilsitzbohrung mit der konvexen Oberfläche oder die zweite Ventilsitzbohrung mit der Kegelfläche verschlossen. Dadurch ist wahlweise die erste Leitung, insbesondere Druckleitung, mit der dritten Leitung, insbesondere Tankleitung, oder die zweite Leitung, insbesondere Arbeitsleitung, mit der dritten Leitung verbunden. Ein Klemmen oder Hängenbleiben in der Schaltstellung unter Druck wird durch die Kugelventilausführung mit der konvexen Oberfläche wirksam vermieden.

In bevorzugter Ausführung ist zwischen der ersten Ventilsitzbohrung und dem Ventilstößel eine Druckfeder angeordnet. Das erfindungsgemäße Ventil kann somit, in der Variante mit Kugel, als federbelastetes Kugel-Kegel-Sitzventil bezeichnet werden.

In einer weiteren vorteilhaften Ausgestaltung ist vorgesehen, dass im unbestromten Zustand des Elektromagneten die zweite Dichtfläche, insbesondere Kegelfläche, die zweite Ventilsitzbohrung abdichtet, und dass im bestromten Zustand des Elektromagneten die erste Dichtfläche, insbesondere konvexe Oberfläche, die erste Ventilsitzbohrung abdichtet. Die bevorzugt vorgesehene Druckfeder dient dazu, dass im unbestromten Zustand die zweite Dichtfläche des Ventilstößels in die zweite Ventilsitzbohrung gedrückt wird.

In einer weiteren bevorzugten Ausbildung ist der Ventilstößel zumindest zweiteilig ausgebildet. Hierzu umfasst der Ventilstößel einen ersten Teil und einen zweiten Teil, wobei der erste Teil linear beweglich im Elektromagneten geführt ist und der zweite Teil in den ersten Teil eingeschraubt ist. Dadurch ist der zweite Teil fest mit dem ersten Teil verbunden und zusammen mit dem ersten Teil linear beweglich. Insbesondere zur Ausbildung des Differenzflächenverhältnisses ist diese zweiteilige Ausführung des Ventilstößels besonders montagefreundlich. Dadurch kann insbesondere der Dichtdurchmesser größer ausgeführt werden als der Bohrungsdurchmesser der zweiten Ventilsitzbohrung.

Des Weiteren ist es bevorzugt vorgesehen, dass zwischen dem Ventilstößel und einem Ankerraum des Elektromagneten eine Dichtung, insbesondere eine Nutringdichtung, angeordnet ist. Diese Dichtung befindet sich am bereits diskutierten Dichtdurchmesser zwischen Ventilstößel und Elektromagnet. Besonders bevorzugt ist der Ankerraum über einen durch den Ventilstößel hindurch verlaufenden Verbindungskanal stets mit der dritten Leitung, insbesondere Tankleitung, frei verbunden. Dadurch wird ein Druckaufbau im Ankerraum bei möglichen Leckagen dieser Nutringdichtung vermieden. Der Verbindungskanal innerhalb des Ventilstößels verläuft vom Ankerraum durch den Ventilstößel hindurch in die Ventilkammer. Wie bereits beschrieben, ist die Ventilkammer stets frei mit der dritten Leitung, insbesondere Tankleitung, verbunden.

Ferner umfasst die Erfindung bevorzugt einen Filter, insbesondere in der ersten Leitung. Besonders bevorzugt wird der Filter außerhalb der Ventilkammer direkt vor dem Einlauf in die erste Ventilsitzbohrung angeordnet. Der Filter verhindert eine Verschmutzung des Öls und insbesondere eine Verschmutzung der beiden Ventilsitze.

In einer weiteren bevorzugten Ausführung liegt die erste Ventilsitzbohrung direkt gegenüber der zweiten Ventilsitzbohrung.

In bevorzugter Ausführung umfasst der Elektromagnet eine Spule, einen Anker, einen Polkern sowie einen Spalt zwischen Polkern und Anker. Der Polkern umfasst eine Bohrung entlang der Längsachse des Ventilstößels und bietet somit eine Aufnahme und eine lineare Führung des Ventilstößels.
Des Weiteren bevorzugt umfasst das erfindungsgemäße Ventil eine Steuerung/Regelung für den Elektromagneten. Mit dieser Steuerung/Regelung kann der Elektromagnet bestromt und unbestromt geschalten werden.

Ferner umfasst die Erfindung ein hydraulisches Cartridge-Magnetwege-ventil, insbesondere hydraulisches Cartridge-3/2-Magnetwegeventil, umfassend ein soeben vorgestelltes hydraulisches Magnetwegeventil, wobei das Gehäuse zum zumindest teilweisen Einführen in eine Ventilaufnahme ausgebildet ist. Diese Ventilaufnahme befindet sich in einem Bauteil, welches das Cartridge-3/2-Magnetwegeventil integral aufnimmt. Besonders bevorzugt werden die erste Leitung, insbesondere Druckleitung, und die zweite Leitung, insbesondere Arbeitsleitung, bezüglich der Längsachse des Ventilstößels radial bzw. senkrecht nach außen geführt. Des Weiteren befinden sich bevorzugt O-Ring-Dichtungen seitlich der nach außen geführten ersten und zweiten Leitungen auf der Oberfläche des Gehäuses, sodass durch Einführen des Cartridge-Gehäuses diese Leitungen druckdicht angeschlossen werden können. Besonders bevorzugt umfasst das Gehäuse hierzu in Umfangsrichtung verlaufende Ringkanäle. Von diesen Ringkanälen aus können bevorzugt mehrere radial gerichtete Kanäle für die erste Leitung und/oder mehrere radial gerichtete Kanäle für die zweite Leitung zur Ventilkammer führen.

Ferner ist es bevorzugt, dass das hydraulische Cartridge-Magnetwege-ventil eine Volumenausgleichseinheit mit Tankraum umfasst. Diese Volumenausgleichseinheit mit Tankraum ist in das Gehäuse integriert oder ist an das Gehäuse angeflanscht. Der Tankraum ist bevorzugt mit der dritten Leitung verbunden. Das Ventil baut sich dabei bevorzugt entlang der Längsachse des Ventilstößels wie folgt auf: Die Ventilkammer mit Ventilstößel ist mittig angeordnet. Auf der einen Seite der Kammer ist die Volumenausgleichseinheit mit Tankraum integriert oder angeflanscht. Auf der anderen Seite der Ventilkammer wird der Elektromagnet montiert. Dadurch kann das hydraulische Cartridge-Magnetwegeventil mit der Volumenausgleichseinheit voran in ein Bauteil eingeschoben werden. Der Elektromagnet und insbesondere ein Stecker am Elektromagnet ragen dabei bevorzugt aus dem Bauteil hervor.

In bevorzugter Ausbildung ist der Tankraum der Volumenausgleichseinheit mittels eines Volumenausgleichskolbens und einer Ausgleichsfeder bzw. Druckfeder leicht druckbelastet.

Im Folgenden wird ein Ausführungsbeispiel der Erfindung anhand der begleitenden Zeichnung genauer erläutert. Dabei zeigt:
- Fig. 1: das Schaltsymbol des erfindungsgemäßen hydraulischen 3/2-Magnetwegeventils gemäß Ausführungsbeispiel in unbe-stromter Stellung,
- Fig. 2: das Schaltsymbol des erfindungsgemäßen hydraulischen 3/2-Magnetwegeventils gemäß Ausführungsbeispiel in be-stromter Stellung,
- Fig. 3: das erfindungsgemäße hydraulische 3/2-Magnetwegeventil gemäß Ausführungsbeispiel in unbestromter Stellung,
- Fig. 4: das erfindungsgemäße hydraulische 3/2-Magnetwegeventil gemäß Ausführungsbeispiel in bestromter Stellung, und
- Fig. 5: einen Ausschnitt aus Fig. 4.

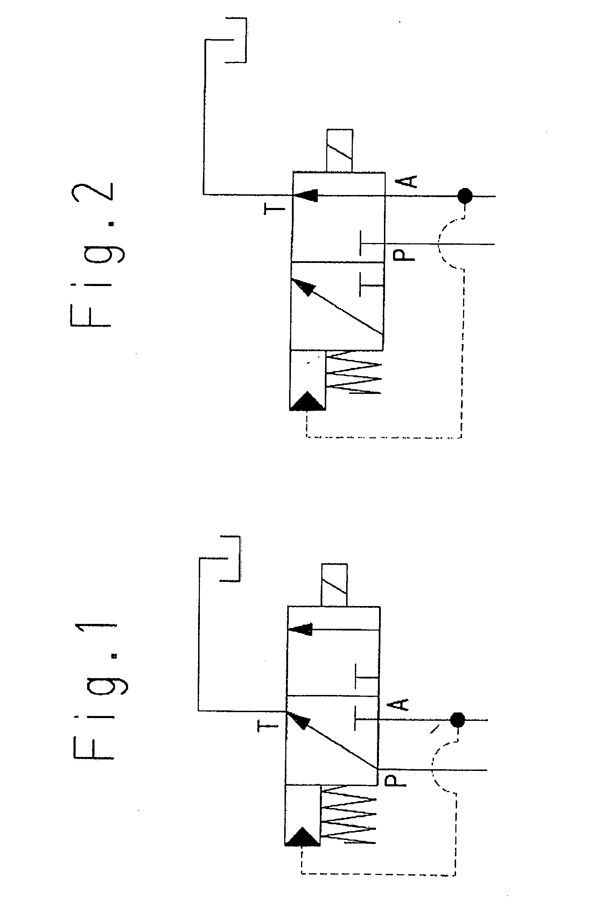

Im Folgenden wird ein Ausführungsbeispiel der Erfindung anhand der Fig. 1 bis 5 genauer erläutert.

Die Fig. 1 zeigt das Schaltsymbol für ein hydraulisches 3/2-Magnetwege-ventil 1 in unbestromter Stellung. Dabei ist die Druckleitung P mit der Tankleitung T verbunden. Die Arbeitsleitung A ist blockiert. Fig. 2 zeigt das Schaltsymbol des hydraulischen 3/2-Magnetwegeventils 1 in bestromter Stellung. Hier ist die Druckleitung P blockiert. Die Arbeitsleitung A ist mit der Tankleitung T verbunden.

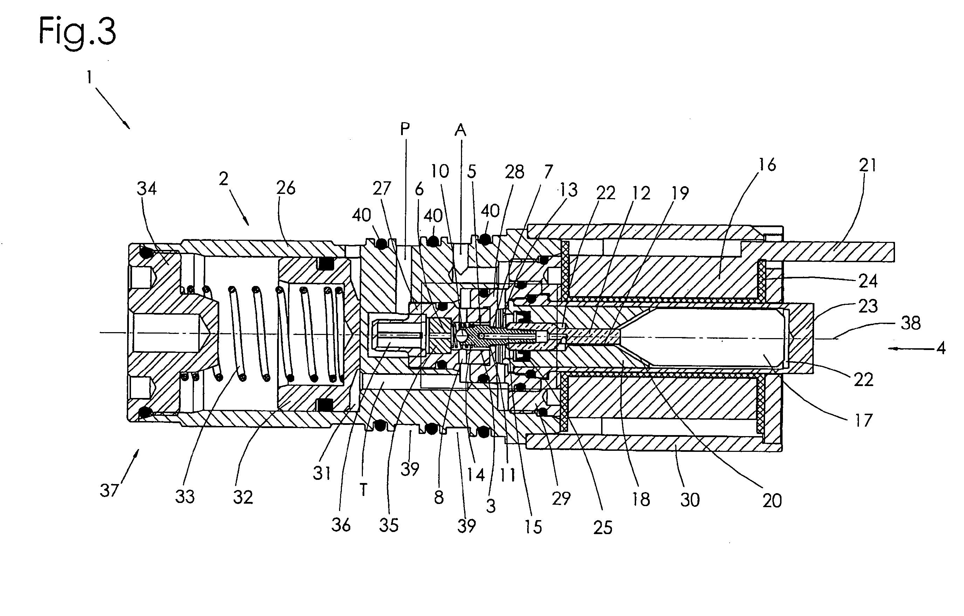

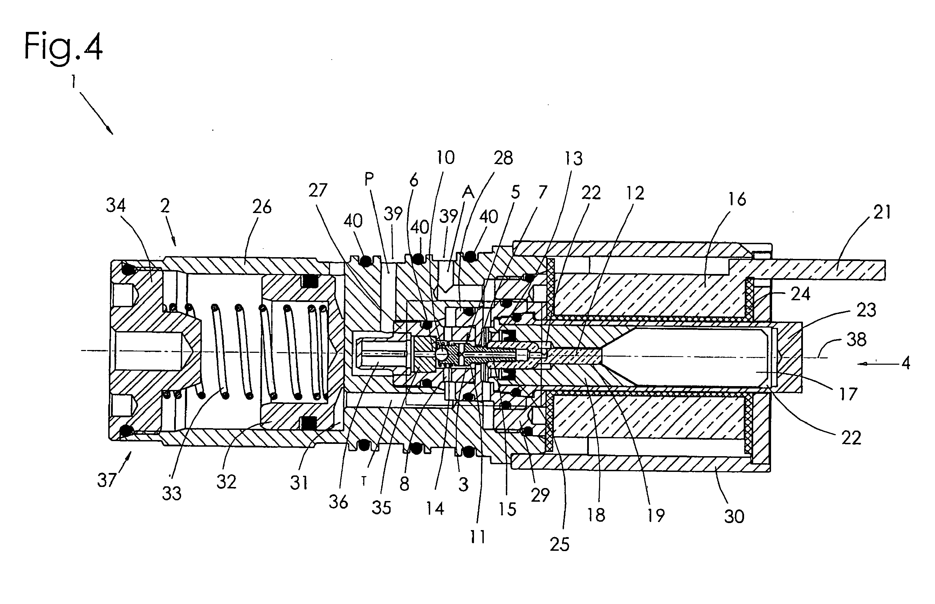

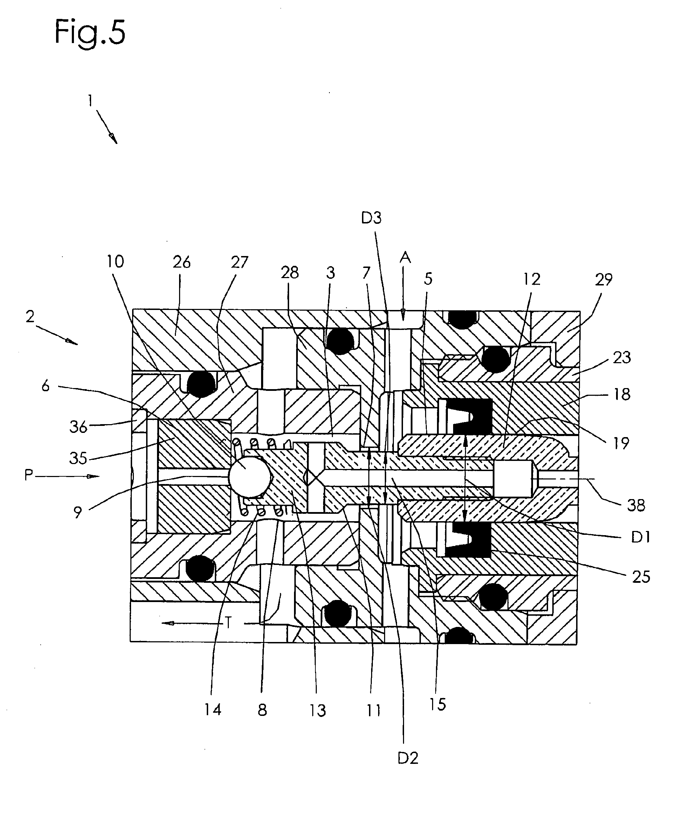

Im Folgenden wird anhand der Fig. 3 die Schaltstellung gemäß Fig. 1 gezeigt. Die Fig. 4 und 5 zeigen die Schaltstellung gemäß Fig. 2.

Fig. 3 zeigt einen Schnitt durch das hydraulische 3/2-Magnetwegeventil im unbestromten Zustand. Das hydraulische 3/2-Magnetwegeventil 1 umfasst ein Gehäuse 2, eine in das Gehäuse 2 integrierte Ventilkammer 3, einen Elektromagneten 4 und einen Ventilstößel 5. Der Ventilstößel 5 bewegt sich in Längsrichtung entlang einer Achse 38.

Die Ventilkammer 3 umfasst eine erste Ventilsitzbohrung 6 als Verbindung der Druckleitung P zur Ventilkammer 3 und eine zweite Ventilsitzbohrung 7 als Verbindung der Arbeitsleitung A zur Ventilkammer 3. Ferner ist an der Ventilkammer 3 eine freie Öffnung 8 zur Tankleitung T ausgebildet. Die erste Ventilsitzbohrung 6 liegt der zweiten Ventilsitzbohrung 7 direkt gegenüber. Die freie Öffnung 8 ist ebenfalls als Bohrung ausgeführt, wobei die Bohrung der freien Öffnung 8 senkrecht zur ersten Ventilsitzbohrung 6 und zur zweiten Ventilsitzbohrung 7 steht. Darüber hinaus ist ein Durchmesser der ersten Ventilsitzbohrung 6 wesentlich kleiner ausgeführt als ein Durchmesser der zweiten Ventilsitzbohrung 7.

Der Ventilstößel 5 ist zweiteilig aufgebaut und umfasst einen ersten Teil 12 und einen in den ersten Teil 12 eingeschraubten und somit mit dem ersten Teil 12 fest verbundenen zweiten Teil 13. Der zweite Teil 13 erstreckt sich vom Inneren der Ventilkammer 3 durch die zweite Ventilsitzbohrung 7 hindurch in Richtung des Elektromagneten 4. Der erste Teil 12 liegt komplett außerhalb der Ventilkammer 3.

Der zweite Teil 13 des Ventilstößels 5 umfasst auf seiner der ersten Ventilsitzbohrung 6 zugewandten Seite eine erste Dichtfläche, ausgebildet als konvexe Oberfläche 9 (siehe insbesondere Fig. 5). Diese konvexe Oberfläche 9 wird gebildet durch eine Kugel 10. Die Kugel 10 wiederum ist in einer stirnseitigen Ausnehmung des Ventilstößels 5, insbesondere des zweiten Teils 13, eingebettet. Des Weiteren ist am Ventilstößel 5, insbesondere am zweiten Teil 13, ein Absatz ausgebildet. Auf diesem Absatz stützt sich eine Druckfeder 14 ab. Die konvexe Oberfläche 9 befindet sich innerhalb dieser Druckfeder 14. Die Druckfeder 14 stützt sich des Weiteren an der Stirnfläche der ersten Ventilsitzbohrung 6 ab. Diese Stirnfläche kann auch als Dichtfläche oder Seitenfläche der ersten Ventilsitzbohrung 6 bezeichnet werden.. Durch diese Anordnung der Druckfeder 14 ist der Ventilstößel 5 in Richtung des Elektromagneten 4 belastet. Im unbestromten Zustand führt dies zu einer Öffnung der ersten Ventilsitzbohrung 6.

An der zweiten Ventilsitzbohrung umfasst der Ventilstößel 5, insbesondere der zweite Teil 13, innerhalb der Ventilkammer 3 eine zweite Dichtfläche, ausgebildet als Kegelringfläche 11. Diese Kegelringfläche 11 ist um den gesamten Umfang des Ventilstößels 5 ausgebildet. Im unbestromten Zustand des Elektromagneten 4 wird diese Kegelringfläche 11 auf die zweite Ventilsitzbohrung 7 gedrückt und dichtet somit die Arbeitsleitung A gegenüber der Ventilkammer 3 ab.

Der Elektromagnet 4 umfasst eine Spule 16, einen Anker 17 und einen Polkern 18. Die Spule 16 ist um den Anker 17 und um den Polkern 18 gewickelt. Der Anker 17 und der Polkern 18 sind entlang der Achse 38 hintereinander angeordnet. Im Polkern 18 befindet sich eine Bohrung entlang der Achse 38. Diese Bohrung bildet eine lineare Führung 19 für zumindest einen Teil des Ventilstößels 5, insbesondere einen Anteil des ersten Teils 12 des Ventilstößels 5. Zwischen dem Polkern 18 und dem Anker 17 befindet sich im bestromten Zustand ein möglichst kleiner Spalt 20. Im unbestromten Zustand ist der Spalt 20 größer. Der Elektromagnet 4 umfasst des Weiteren eine Anschlussleitung bzw. Spannungsversorgung 21 zum Anschluss einer Steuerung/Regelung an das hydraulische 3/2-Magnet-wegeventil 1. Der Anker 17 und der Polkern 18 sind in eine Hülse 23 eingebettet. Ferner befindet sich eine Isolierung 24 zwischen der Hülse 23 und der Spule 16.

Der Polkern 18 und der Anker 17 befinden sich in einem sogenannten Ankerraum 22. Dieser Ankerraum 22 befindet sich innerhalb der Hülse 23. Die Arbeitsleitung A ist gegenüber diesem Ankerraum 22 durch eine Spezialdichtung, insbesondere Nutringdichtung 25, abgedichtet. Diese Nutringdichtung 25 befindet sich zwischen dem Ventilstößel 5, insbesondere dem ersten Teil 12, und dem Polkern 18. Innerhalb des Ventilstößels 5 verläuft ein Verbindungskanal 15. Dieser Verbindungskanal 15 verbindet den Ankerraum 22 mit der Ventilkammer 3. Da die Ventilkammer 3 stets frei mit der Tankleitung T verbunden ist, ist somit auch der Ankerraum 22 stets drucklos. Der Verbindungskanal 15 wird gebildet durch eine Längsbohrung entlang der Achse 38 im Ventilstößel 5 sowie durch Bohrungen senkrecht zur Achse 38 von der Oberfläche des Ventilstößels 5 zu der längs verlaufenden Bohrung. Insbesondere durch die zweiteilige Ausführung des Ventilstößels 5 kann die Längsbohrung entlang der Achse 38 im Inneren des Ventilstößels 5 hergestellt werden.

Das Gehäuse 2 umfasst ein Basisgehäuseteil 26, einen ersten Ventilkammereinsatz 27 und einen zweiten Ventilkammereinsatz 28. Der erste Ventilkammereinsatz 27 und der zweite Ventilkammereinsatz 28 bilden zusammen die Ventilkammer 3. Das hydraulische 3/2-Magnetwegeventil 1 ist dabei wie folgt aufgebaut bzw. wird wie folgt montiert: Am Elektromagneten 4 befindet sich ein ringförmiger Fortsatz 29. In diesen Fortsatz 29 wird ein Teil des zweiten Ventilkammereinsatzes 28 eingebettet. Der zweite Ventilkammereinsatz 28 wiederum nimmt den ersten Ventilkammereinsatz 27 in sich auf. Die bereits erwähnte Hülse 23 des Elektromagneten 4 erstreckt sich bis zum zweiten Ventilkammereinsatz 28 und ist mit diesem verbunden. Die komplette Einheit bestehend aus Elektromagnet 4, zweitem Ventilkammereinsatz 28 und erstem Ventilkammereinsatzes 27 wird in das Basisgehäuseteil 26 eingeschraubt. Hierzu ist am Basisgehäuseteil 26 ein Innengewinde und am Fortsatz 29 des Elektromagneten 4 ein entsprechendes Außengewinde ausgebildet. Die einzelnen Gehäusebestandteile sind gegeneinander abgedichtet.

Des Weiteren umfasst das Gehäuse 2 eine Kappe 30. Diese Kappe 30 umgreift den Elektromagneten 4 und sitzt am Basisgehäuseteil 26 auf.

Innerhalb des ersten Ventilkammereinsatzes 27 ist ein gebohrter Einsatz 35 eingebracht. In diesem gebohrten Einsatz 35 ist die erste Ventilsitzbohrung 6 ausgebildet. Darüber hinaus sitzt in dem ersten Ventilkammereinsatz 27 ein Filter 36. Dieser Filter 36 befindet sich außerhalb der Ventilkammer 3 und in der Druckleitung P.

Des Weiteren ist innerhalb des Basisgehäuseteils 26 eine Volumenausgleichseinheit 37 mit Tankraum 31 integriert. Diese Volumenausgleichseinheit 37 mit Tankraum 31 umfasst einen Volumenausgleichskolben 32, eine Ausgleichsfeder bzw. Längenausgleichsfeder 33 und ein Lager 35 für die Ausgleichsfeder 33. Der Tankraum 31 ist mit der Tankleitung T verbunden. Der Volumenausgleichskolben 32 definiert eine Wandung des Tankraums 31. Der Kolben 32 ist durch die Ausgleichsfeder 33 leicht federbelastet. Die Ausgleichsfeder 33 stützt sich auf einer Seite gegen den Volumenausgleichskolben 32 und auf der anderen Seite gegen das Federlager 34 ab. Das Federlager 34 ist stirnseitig in das Basisgehäuseteil 26 eingeschraubt.

Das hydraulische 3/2-Magnetwegeventil 1 ist weitgehend rotationssymmetrisch bezüglich der Achse 38 ausgebildet. Von dieser Rotationssymmetrie weichen selbstverständlich die Druckleitungen P, Arbeitsleitungen A und Tankleitungen T ab. Die Druckleitung P und die Arbeitsleitung A münden an zumindest jeweils einer Stelle auf der Mantelfläche des Basisgehäuseteils 26. Dort sind Ringkanäle 39 ausgeführt. Diese Ringkanäle 39 werden mit O-Ring-Dichtungen 40 abgedichtet, wenn das in Cartridge-Bauart ausgeführte 3/2-Magnetwegeventil 1 in eine entsprechende Aufnahme eingeführt wird.

Fig. 4 zeigt das hydraulische 3/2-Magnetwegeventil 1 gemäß Ausführungsbeispiel im bestromten Zustand. Hier ist gut zu sehen, dass der Ventilstößel 5 gegenüber der Darstellung in Fig. 3 nach links bewegt wurde. Dadurch ist die Arbeitsleitung A über die zweite Ventilsitzbohrung 7 direkt mit der Ventilkammer 3 und somit mit der Tankleitung T und dem Tankraum 31 verbunden. Die Druckleitung P ist durch den Sitz der Kugel 10 in der ersten Ventilsitzbohrung 6 blockiert und somit nicht mit der Ventilkammer 3 verbunden.

Fig. 5 zeigt einen Detailausschnitt aus Fig. 4. An dieser Darstellung kann insbesondere das Differenzflächenverhältnis erläutert werden. Zu beachten ist, dass dieses Differenzflächenverhältnis bei einer geschlossenen zweiten Ventilsitzbohrung 7 und somit bei der in den Fig. 1 und 3 gezeigten unbestromten Ventilstellung zum Einsatz kommt. Wie die Fig. 5 zeigt, weist der Ventilstößel 5 an der Nutringdichtung 25 einen Dichtdurchmesser D1 auf. Die zweite Ventilsitzbohrung 7 ist mit einem Innendurchmesser D2 ausgeführt. Der Ventilstößel 5 weist in dem Bereich zwischen der Nutringdichtung 25 und der zweiten Ventilsitzbohrung 7 einen kleinsten Durchmesser D3 auf. Bei geschlossener zweiter Ventilsitzbohrung 7 wirkt nun der Druck in der Arbeitsleitung A auf folgende Flächen des Ventilstößels 5: Die erste Fläche berechnet sich durch (D2²/4 * π) - D3²/4 * π). Die zweite Fläche berechnet sich durch (D1²/4 * π) - (D3²/4 * π). Dadurch, dass die erste Fläche kleiner als die zweite Fläche ist, wirkt im geschlossenen Zustand der zweiten Ventilsitzbohrung 7 der Arbeitsdruck in der gezeigten Darstellung nach rechts. Dadurch wird die Druckfeder 14 unterstützt und die Kegelfläche 11 wird in die zweite Ventilsitzbohrung 7 gezogen.

Anhand des dargestellten Ausführungsbeispiels wurde aufgezeigt, wie ein hydraulisches 3/2-Magnetwegeventil 1 insbesondere in Cartridge-Bau-weise für eine leckölfreie Arbeitsweise ausgeführt werden kann. In der nicht bestromten Schaltstellung, gezeigt in Fig. 3, wird der Ventilstößel 5 durch die Druckfeder 14 mit der als Kegelfläche 11 ausgebildeten Seite in die zweite Ventilsitzbohrung 7 der Arbeitsleitung gedrückt und sperrt somit den Anschluss dieser Leitung gegenüber dem Tank öldicht ab. Der Ventilstößel 5 ist auf der Mägnetseite zum Ankerraum 22 radial mit einer Nutringdichtung 25 ausgeführt. Der Dichtdurchmesser D1 des Ventilstößels 5 zum Ankerraum 22 ist größer ausgeführt als die zweite Ventilsitzbohrung 7. Dadurch entsteht ein definiertes Flächenverhältnis zwischen dem Kegelsitz und dem Abdichtdurchmesser des Ankerraums 22. Wird nun die Arbeitsleitung A mit Druck beaufschlagt, so entsteht eine Differenzkraft über das Flächenverhältnis zwischen der Arbeitsleitung und dem abgedichteten Ankerraum 22, die den Ventilstößel 5 in Richtung des Magneten zieht und zusätzlich zur Federkraft gegen die zweite Ventilsitzbohrung 7 wirkt. Mit ansteigendem Druck in der Arbeitleitung erhöht sich die Dichtwirkung. Der Elektromagnet 4 ist bevorzugt so ausgelegt, dass ein Schalten gegen die Federkraft plus Differenzkraft verhindert wird. Die Druckleitung P und die Tankleitung T sind in dieser Stellung miteinander verbunden.

In der bestromten Schaltstellung gemäß Fig. 4 ist die Arbeitsleitung A drucklos, wobei der Ventilstößel 5 gegen die Federkraft mit seiner Kugel 10 die Druckleitung P öldicht abdichtet. Ein über die Druckleitung P angeschlossener Verbraucher kann nun wirksam bis zum ausgelegten Betriebsdruck abgedichtet werden. Dieser Betriebsdruck ist abhängig von der Magnetkraft. In dieser Schaltstellung ist die Arbeitsleitung A drucklos mit der Tankleitung T verbunden. Dadurch kann sich in der Arbeitsleitung A kein Druck bzw. nur ein geringer Staudruck aufbauen.

Die Ausgestaltungen des vorgestellten 3/2-Magnetwegeventils sind, unabhängig von der Cartridge Bauweise und unabhängig von der Anzahl an Leitungen und/oder Schaltstellungen, auch auf weitere Ventilbauarten erfindungsgemäß anwendbar. Insbesondere die Kombination aus Kugelsitz und Kegelsitz in einem Ventil, insbesondere auf einem Stößel, und/oder das Differenzflächenverhältnis sind erfindungsgemäß auf weitere Ventile anwendbar.

### Bezugszeichenliste

- 1: 3/2-Magnetwegeventil
- 2: Gehäuse
- 3: Ventilkammer
- 4: Elektromagnet
- 5: Ventilstößel
- 6, 7: Ventilsitzbohrungen
- 8: freie Öffnung
- 9: konvexe Oberfläche
- 10: Kugel
- 11: Kegelringfläche
- 12: erster Teil
- 13: zweiter Teil
- 14: Druckfeder
- 15: Verbindungskanal
- 16: Spule
- 17: Anker
- 18: Polkern
- 19: lineare Führung
- 20: Spalt
- 21: Anschlussleitung
- 22: Ankerraum
- 23: Hülse
- 24: Isolierung
- 25: Nutringdichtung
- 26: Basisgehäuseteil
- 27: erster Ventilkammereinsatz
- 28: zweiter Ventilkammereinsatz
- 29: Fortsatz
- 30: Kappe
- 31: Tankraum
- 32: Volumenausgleichskolben
- 33: Ausgleichsfeder
- 34: Federlager
- 35: gebohrter Einsatz
- 36: Filter
- 37: Volumenausgleichseinheit
- 38: Achse
- 39: Ringkanäle
- 40: O-Ringabdichtungen

- P: Druckleitung
- T: Tankleitung
- A: Arbeitsleitung

## Patentansprüche

1. Hydraulisches Magnetwegeventil, insbesondere hydraulisches 3/2-Magnetwegeventil (1), umfassend
- ein Gehäuse (2),
- eine in das Gehäuse (2) integrierte Ventilkammer (3) mit einer ersten Ventilsitzbohrung (6) als Verbindung zu einer ersten Leitung, insbesondere Druckleitung (P), einer zweiten Ventilsitzbohrung (7) als Verbindung zu einer zweiten Leitung, insbesondere Arbeitsleitung (A), und einer freien Öffnung (8) zu einer dritten Leitung, insbesondere Tankleitung (T),
- einen Elektromagneten (4), und
- einen durch den Elektromagneten (4) bewegbaren und teilweise in der Ventilkammer (3) angeordneten Ventilstößel (5),
- wobei der Ventilstößel (5) innerhalb der Ventilkammer (3) eine der ersten Ventilsitzbohrung (6) zugewandte erste Dichtfläche (9) und eine der zweiten Ventilsitzbohrung (7) zugewandte zweite Dichtfläche (11) umfasst, sodass wahlweise die erste Ventilsitzbohrung (6) oder die zweite Ventilsitzbohrung (7) verschließbar ist,
- wobei sich der Ventilstößel (5) aus der Ventilkammer (3) hinaus durch die zweite Ventilsitzbohrung (7) hindurch zum Elektromagneten (4) erstreckt, **dadurch gekennzeichnet daß**
- der Ventilstößel (5) bei geschlossener zweiter Ventilsitzbohrung (7) über ein Differenzflächenverhältnis durch den Druck in der zweiten Leitung, insbesondere Arbeitsleitung (A), in die zweite Ventilsitzbohrung (7) gezogen wird und
- wobei ein erster Dichtdurchmesser (D1) des Ventilstößels (5) außerhalb der Ventilkammer (3) größer ist als ein zweiter Durchmesser (D2) der zweiten Ventilsitzbohrung (7), sodass das Differenzflächenverhältnis entsteht, wobei der ersten Dichtdurchmesser (D1) an einer Dichtung (25) zwischen Ventilstößel (5) und Elektromagnet (4) liegt.

2. Hydraulisches Magnetwegeventil nach Anspruch 1, **dadurch gekennzeichnet, dass** zwischen der ersten Ventilsitzbohrung (6) und dem Ventilstößel (5) eine Druckfeder (14) angeordnet ist.

3. Hydraulisches Magnetwegeventil nach einem der vorhergehenden Ansprüche, **dadurch gekennzeichnet, dass** im unbestromten Zustand des Elektromagneten (4) die zweite Dichtfläche (11) die zweite Ventilsitzbohrung (7) abdichtet, und dass im bestromten Zustand des Elektromagneten (4) die erste Dichtfläche (9) die erste Ventilsitzbohrung (6) abdichtet.

4. Hydraulisches Magnetwegeventil nach einem der vorhergehenden Ansprüche, **dadurch gekennzeichnet, dass** die erste Dichtfläche (9) eine konvexe Oberfläche, insbesondere eine Kugel (10), umfasst.

5. Hydraulisches Magnetwegeventil nach einem der vorhergehenden Ansprüche, **dadurch gekennzeichnet, dass**. die zweite Dichtfläche (11) eine Kegelfläche, insbesondere eine Kegelringfläche, umfasst.

6. Hydraulisches Magnetwegeventil nach einem der vorhergehenden Ansprüche, **dadurch gekennzeichnet, dass** der Ventilstößel (5) einen ersten Teil (12) und einen zweiten Teil (13) umfasst, wobei der erste Teil (12) linearbeweglich im Elektromagneten (4) geführt ist und der zweite Teil (13) in den ersten Teil (12) eingeschraubt ist.

7. Hydraulisches Magnetwegeventil nach einem der vorhergehenden Ansprüche, **dadurch gekennzeichnet, dass** zwischen dem Ventilstößel (5) und einem Ankerraum (22) des Elektromagneten (4) eine Dichtung (25), insbesondere Nutringdichtung, angeordnet ist, wobei der Ankerraum (22) über einen durch den Ventilstößel (5) hindurch verlaufenden Verbindungskanal (15) mit der dritten Leitung, insbesondere Tankleitung (T), frei verbunden ist.

8. Hydraulisches Cartridge-Magnetwegeventil, insbesondere hydraulisches Cartridge-3/2-Magnetwegeventil, umfassend ein hydraulisches Magnetwegeventil (1) nach einem der vorhergehenden Ansprüche, wobei das Gehäuse (2) zum zumindest teilweisen Einführen in eine Ventilaufnahme ausgebildet ist.

9. Hydraulisches Cartridge-Magnetwegeventil nach Anspruch 8, **gekennzeichnet durch** eine Volumenausgleichseinheit (37) mit Tankraum (31), wobei die Volumenausgleichseinheit (37) mit Tankraum (31) im Gehäuse (2) integriert ist oder an das Gehäuse angeflanscht ist.

## Claims

1. A hydraulic solenoid distribution valve, in particular a hydraulic 3/2-way solenoid valve (1), comprising
- a housing (2),
- a valve chamber (3) integrated in the housing (2) and having a first valve seat bore (6) as a connection to a first line, in particular a pressure line (P), a second valve seat bore (7) as a connection to a second line, in particular a work line (A), and a free aperture (8) to a third line, in particular a tank line (T),
- a solenoid (4), and
- a valve spindle (5) which can be moved by the solenoid (4) and which is arranged partially in the valve chamber (3),
- wherein the valve spindle (5) within the valve chamber (3) comprises a first sealing surface (9) facing the first valve seat bore (6), and a second sealing surface (11) facing the second valve seat bore (7), so that the first valve seat bore (6) or the second valve seat bore (7) is optionally closable,
- wherein the valve spindle (5) extends out of the valve chamber (3) through the second valve seat bore (7) to the solenoid (4), **characterized in that**
- the valve spindle (5) in the closed state of the valve seat bore (7) is drawn, via a differential area ratio, by the pressure in the second line, in particular the work line (A), into the second valve seat bore (7), and
- wherein a first sealing diameter (D1) of the valve spindle (5) outside the valve chamber (3) is larger than a second diameter (D2) of the second valve seat bore (7), such that the differential area ratio is generated, wherein the first sealing diameter (D1) is defined at a seal (25) between the valve spindle (5) and the solenoid (4).

2. The hydraulic solenoid distribution valve according to claim 1, **characterized in that** a pressure spring (14) is arranged between the first valve seat bore (6) and the valve spindle (5).

3. The hydraulic solenoid distribution valve according to any one of the preceding claims, **characterized in that** the second sealing surface (11) is configured to seal the second valve seat bore (7) in a de-energized state of the solenoid (4), and that the first sealing surface (9) is configured to seal the first valve seat bore (6) in an energized state of the solenoid (4).

4. The hydraulic solenoid distribution valve according to any one of the preceding claims, **characterized in that** the first sealing surface (9) comprises a convex surface, particularly a ball (10).

5. The hydraulic solenoid distribution valve according to any one of the preceding claims, **characterized in that** the second sealing surface (11) comprises a cone surface, in particular a cone ring surface.

6. The hydraulic solenoid distribution valve according to any one of the preceding claims, **characterized in that** the valve spindle (5) comprises a first part (12) and a second part (13), the first part (12) being guided to be linearly movable in the solenoid (4) and the second part (13) being screwed into the first part (12).

7. The hydraulic solenoid distribution valve according to any one of the preceding claims, **characterized in that** a seal (25), particularly a groove ring seal, is arranged between the valve spindle (5) and an armature space (22) of the solenoid (4), wherein the armature space (22) is freely connected to the third line, particularly tank line (T), via a connection channel (15) extending through the valve spindle (5).

8. A hydraulic cartridge solenoid distribution valve, particularly a hydraulic cartridge 3/2-way solenoid valve, comprising a hydraulic solenoid distribution valve (1) according to any one of the preceding claims, wherein the housing (2) is configured to be at least partially inserted into a valve adapter.

9. The hydraulic cartridge solenoid distribution valve according to claim 8, **characterized by** a volume compensation unit (37) including a tank compartment (31), wherein the volume compensation unit (37) including the tank compartment (31) is integrated in the housing (2) or connected to the housing by a flange.

## Revendications

1. Distributeur électromagnétique hydraulique notamment distributeur électromagnétique hydraulique à 3/2 voies (1) comprenant :
- un boîtier (2),
- une chambre de distributeur (3) intégrée dans le boitier (2) ayant un premier perçage formant un premier siège de soupape (6) comme liaison avec une première conduite, notamment une conduite de pression (P), un second perçage formant un second siège de soupape (7) comme liaison avec une seconde conduite, notamment une conduite de travail (A) ainsi qu'une ouverture libre (8) vers une troisième conduite, notamment une conduite de réservoir (T),
- un électroaimant (4), et
- un poussoir de soupape (5) susceptible d'être déplacé par l'électroaimant (4) et qui se trouve en partie dans la chambre de soupape (3),
- le poussoir de soupape (5) ayant dans la chambre de soupape (3) une première surface d'étanchéité (9) tournée vers le premier perçage formant siège de soupape (6) et une seconde surface d'étanchéité (11) tournée vers le second perçage formant siège de soupape (7) de façon à pouvoir fermer au choix le premier perçage formant siège de soupape (6) ou le second perçage formant siège de soupape (7),
- le poussoir de soupape (5) s'étendant hors de la chambre de soupape (3) à travers le second perçage formant siège de soupape (7) pour arriver dans l'électroaimant (4),
distributeur **caractérisé en ce que**
lorsque le second perçage formant siège de soupape (7) est fermé le poussoir de soupape (5) est tiré dans le second perçage formant siège de soupape (7) selon un rapport des différences de surfaces par la pression régnant dans la seconde conduite, notamment la conduite de travail (A), et
le premier diamètre (D1) formant siège du poussoir de soupape (5) à l'extérieur de la chambre de soupape (3) est plus grand que le second diamètre (D2) du second perçage formant siège de soupape (7) pour générer le rapport des différences de surfaces, le premier diamètre d'étanchéité (D1) du premier joint (25) se trouvant entre le poussoir de soupape (5) et l'électroaimant (4).

2. Distributeur électromagnétique hydraulique selon la revendication 1,
**caractérisé par**
un ressort de compression (14) entre le premier perçage formant siège de soupape (6) et le poussoir de soupape (5).

3. Distributeur électromagnétique hydraulique selon l'une des revendications précédentes,
**caractérisé en ce que**
si l'électroaimant (4) est à l'état non alimenté, la seconde surface d'étanchéité (11) ferme de manière étanche le second perçage formant siège de soupape (7) et lorsque l'électroaimant (4) est alimenté, la première surface d'étanchéité (9) ferme de manière étanche le premier perçage formant siège de soupape (6).

4. Distributeur électromagnétique hydraulique selon l'une des revendications précédentes,
**caractérisé en ce que**
la première surface d'étanchéité (9) comporte une surface supérieure convexe notamment une bille (10).

5. Distributeur électromagnétique hydraulique selon l'une des revendications précédentes,
**caractérisé en ce que**
la seconde surface d'étanchéité (11) comporte une surface conique, notamment une surface annulaire conique.

6. Distributeur électromagnétique hydraulique selon l'une des revendications précédentes,
**caractérisé en ce que**
le poussoir de soupape (5) a une première partie (12) et une seconde partie (13), la première partie (12) étant guidée de manière mobile linéairement dans l'électroaimant (4) et la seconde partie (13) étant vissée dans la première partie (12).

7. Distributeur électromagnétique hydraulique selon l'une des revendications précédentes,
**caractérisé par**
un joint (25), notamment un joint à rainure est installé entre le poussoir de soupape (5), et la chambre d'induit (22) de l'électroaimant (4) qui est reliée librement à la troisième conduite, notamment à la conduite de réservoir (T) par un canal de liaison (15) traversant le poussoir de soupape (5).

8. Distributeur électromagnétique hydraulique à cartouche, notamment distributeur électromagnétique hydraulique à cartouche à 3/2 voies, comprenant un distributeur électromagnétique hydraulique (1) selon l'une des revendications précédentes, le boîtier (2) étant réalisé au moins pour être introduit partiellement dans un logement de soupape.

9. Distributeur électromagnétique hydraulique à cartouche selon la revendication 8,
**caractérisé par**
une unité de compensation de volume (37) munie d'une chambre réservoir (31), cette unité d'équilibrage de volume (37) étant intégrée avec la chambre réservoir (31) dans le boîtier (2) ou fixée par bride au boîtier.
